Europäisches Patentamt

European Patent Office

Office européen des brevets

(11) Veröffentlichungsnummer: **0 123 206**
A2

(12) # EUROPÄISCHE PATENTANMELDUNG

(21) Anmeldenummer: 84104029.8

(22) Anmeldetag: 11.04.84

(51) Int. Cl.³: **H 04 M 11/04**

(30) Priorität: 26.04.83 DE 3315017

(43) Veröffentlichungstag der Anmeldung:
31.10.84 Patentblatt 84/44

(84) Benannte Vertragsstaaten:
DE FR GB

(71) Anmelder: International Standard Electric Corporation
320 Park Avenue
New York New York 10022(US)

(84) Benannte Vertragsstaaten:
FR GB

(71) Anmelder: Standard Elektrik Lorenz Aktiengesellschaft
Hellmuth-Hirth-Strasse 42
D-7000 Stuttgart 40(DE)

(84) Benannte Vertragsstaaten:
DE

(72) Erfinder: Willhaus, Werner
Hornissenweg 100
D-7000 Stuttgart 40(DE)

(74) Vertreter: Gähr, Hans-Dieter, Dipl.-Ing. (FH) et al,
c./o.Standard Elektrik Lorenz AG Patent- und
Lizenzwesen Postfach 300 929 Kurze Strasse 8
D-7000 Stuttgart 30(DE)

(54) Fernsprechapparat mit Rufnummernspeicher.

(57) Die Erfindung betrifft einen Fernsprechapparat mit Rufnummernspeicher und einer Zeitüberwachungsschaltung, die eine Steuerung zur Auslösung der selbsttätigen Wahl einer gespeicherten Rufnummer, die nach Ablauf einer vorgegebenen Zeit erfolgt, aktiviert.

EP 0 123 206 A2

Croydon Printing Company Ltd.

W.Willhaus-6

Fernsprechapparat mit Rufnummernspeicher

Die Erfindung betrifft einen Fernsprechapparat nach dem Oberbegriff des Anspruchs 1.

Fernsprechapparate mit Speicher zur Aufnahme von Rufnummern sind seit geraumer Zeit im Einsatz, z.B. das Comfort-Telefon alpha der Deutschen Bundespost. Bei diesem Apparat können Rufnummern folgendermaßen gespeichert und wieder abgerufen werden: die zuletzt gewählte Nummer wird bei der Wahl automatisch gespeichert und durch Betätigen einer bestimmten Taste erneut ausgesendet (einfache Wahlwiederholung). Dies läßt sich so oft wiederholen bis eine neue Rufnummer gewählt wird, wodurch die gespeicherte gelöscht wird. Die Rufnummer läßt sich aber auch beliebig lange im Speicher für erweiterte Wahlwiederholung speichern. Außerdem ist es möglich, eine Anzahl Rufnummern beliebig lange zu speichern, was durch gleichzeitiges Betätigen einer Speichertaste und einer Zifferntaste vor der Rufnummernwahl erfolgt. Das Aussenden einer Nummer geschieht durch Betätigen der Speichertaste und der Zifferntaste nacheinander. Jeder Zifferntaste des Tastwahlblockes ist ein Speicherplatz zugeordnet. Darüber-

W.Willhaus-6

hinaus ist es möglich, eine Rufnummer einzuspeichern, deren Aussendung mit jeder beliebigen Ziffern-, Speicher- oder Wahlwiederholtaste veranlaßt werden kann, was z.B. für Notrufe bedeutsam ist. (Unterrichtsbl. der DBP, Jg.34/ 1981, Nr. 10, Seiten 363 bis 367).

Ferner ist aus der DE-AS 28 37 575 ein Verfahren zur Herstellung einer Notrufverbindung bekannt, bei dem im Anschluß an den Wählvorgang eine automatische Übermittlung von Daten über die Hilfe suchende Stelle stattfindet. Nach Eingang des Hilferufes in der Notrufzentrale wird die Verbindung wieder getrennt, um die Leitung in der Notrufzentrale nicht unnötig lange zu belegen. Bei der Hilfe suchenden Stelle wird hingegen die Fernsprecheinrichtung so umgeschaltet, daß diese als Freisprecheinrichtung wirkt. Damit kommt jeder eingehende Anruf an, ohne daß sich die hilfsbedürftige Person dem Telefonapparat zu nähern braucht. Um auch den Notruf ohne körperlichen Kontakt mit dem Telefonapparat auslösen zu können, ist eine drahtlose Betätigung durch eine Fernbedienung vorgesehen.

Der Erfindung liegt die Aufgabe zugrunde, einen Fernsprechapparat der eingangs genannten Art so zu verbessern, daß eine automatische Überwachung seiner Betätigung in bestimmten Zeitabständen erfolgen kann. Gelöst wird diese Aufgabe durch die im Kennzeichen des Anspruchs 1 angegebenen Merkmale. Vorteilhafte Weiterbildungen sind den Unteransprüchen zu entnehmen. Ein solcher Fernsprechapparat ist besonders für alte und hilfsbedürftige Menschen von Vorteil, da ihnen damit die Angst vor Hilflosigkeit und Verlassensein genommen werden kann. Sind solche Menschen einmal nicht mehr imstande, den Fernsprechapparat selbst zu bedienen, um Hilfe herbeizurufen, sei es durch Unfall, Ohnmacht oder Krankheit, so wählt der Apparat nach Ablauf

W.Willhaus-6

einer bestimmten, einstellbaren Zeit selbsttätig eine gewünschte Nummer und meldet sich mit einem zuvor festgelegten Notsignal. Weitere Vorteile sind in der nachfolgenden Beschreibung der Erfindung aufgeführt.

Der Fernsprechapparat enthält eine Zeitsteuerung, die im Bedarfsfall aktiviert werden kann. Die dann ablaufende Zeitüberwachung ist hinsichtlich der Länge der Zeit einstellbar, also beispielsweise auf 8 oder 12 oder auch 24 Stunden. Wird bis zum Ablauf der eingestellten Zeit ein Gespräch geführt, der Gabelumschalter oder eine "Wachtaste" betätigt, so wird die Zeitsteuerung wieder auf Null zurückgestellt und die eingestellte Zeit beginnt erneut zu laufen. Wenn der Gabelumschalter oder die Wachtaste bis zum Zeitablauf aber nicht betätigt wird, so aktiviert die Zeitüberwachungsschaltung eine Steuerung, die das Belegen der Amtsleitung veranlaßt und die vorher einprogrammierte Rufnummer aus dem Rufnummernspeicher abruft und aussendet.

Über eine Wähltonerkennung wird nun festgestellt, ob die Verbindung mit dem angewählten Teilnehmer hergestellt ist oder nicht. Im ersten Fall muß dem angerufenen Teilnehmer, egal, ob es sich dabei um bestimmte Personen oder um eine Notrufzentrale handelt, der Hilferuf übermittelt werden. Da vorausgesetzt wird, daß die Hilfe benötigende Person nicht in der Lage ist, sich verständlich zu machen, fällt diese Aufgabe dem Fernsprechapparat zu. Es sind verschiedene Lösungen möglich. Zum Beispiel können vorher als Notsignal definierte Geräusche oder Töne übermittelt werden, d.h., daß nach Herstellen der Verbindung ein Tongenerator angeschaltet wird. Eine andere Möglichkeit ist, den Notruf mit Hilfe von synthetischer Sprache abzusetzen, so daß ein verständlicher Text durchgegeben werden kann, z.B. mit

W.Willhaus-6

der Rufnummer oder der Anschrift des anrufenden Apparates. Das gleiche läßt sich zwar mit einem Ansagegerät machen, doch kann ein Sprachsynthesizer mit Hilfe der Halbleitertechnik billiger und leichter in den Fernsprechapparat integriert werden. Bei Anruf in einer organisierten Überwachungszentrale ist auch eine codierte Übermittlung der Rufnummer des Hilfesuchenden sinnvoll.

Im zweiten Fall, also wenn innerhalb einer festgelegten Zeit keine Verbindung zustandekommt, wird die Amtsleitung wieder ausgelöst und nach einer ebenfalls festgelegten Zeitspanne ein weiterer Verbindungsaufbau versucht. Dies wiederholt die Zeitsteuerung so lange, bis die Verbindung hergestellt werden kann.

Als Alternative hierzu kann auf die Wahlwiederholungen verzichtet und statt dessen eine andere Notrufnummer aus dem Speicher abgerufen und ausgesendet werden. Wenn es nötig erscheint, kann diese Wahl auf eine dritte und vierte Rufnummer fortgeführt werden, falls auch die zweite angewählte Verbindung nicht hergestellt werden kann. Die Speicherung solcher Ersatz-Rufnummern ist besonders dann sinnvoll, wenn es sich bei den Angerufenen um bestimmte Personen, wie z.B. Verwandte, handelt und nicht um organisierte Notdienste, deren Telefonapparate meist ständig besetzt sind.

W.Willhaus-6

Ansprüche

1. Fernsprechapparat mit Rufnummernspeicher und einer Einrichtung zur Auslösung der selbsttätigen Wahl einer gespeicherten Rufnummer, d a d u r c h  g e k e n n z e i c h n e t, daß die Einrichtung eine Zeitüberwachungsschaltung ist, die nach Ablauf einer vorgegebenen Zeit eine Steuerung anschaltet, die eine Amtsleitung belegt und die Aussendung der gespeicherten Rufnummer veranlaßt.

2. Fernsprechapparat nach Anspruch 1, dadurch gekennzeichnet, daß die Steuerung nach der Wahl eine Wähltonerkennung anschaltet, die die Amtsleitung überwacht und diese wieder abschaltet, wenn innerhalb einer vorgegebenen Zeit keine Verbindung erfolgt.

3. Fernsprechapparat nach Anspruch 2, dadurch gekennzeichnet, daß die Steuerung bei Verbindung einen Tongenerator an die Amtsleitung schaltet.

4. Fernsprechapparat nach Anspruch 2, dadurch gekennzeichnet, daß die Steuerung bei Verbindung einen Sprachsynthesizer an die Amtsleitung schaltet.

ZT/P1-Gei/V

25.04.1983

W.Willhaus-6

5. Fernsprechapparat nach Anspruch 2, dadurch gekennzeichnet, daß die Steuerung bei Verbindung ein Ansagegerät an die Amtsleitung schaltet.

6. Fernsprechapparat nach Anspruch 2, dadurch gekennzeichnet, daß der Speicher (eine) weitere Rufnummer(n) enthält, die nach erfolgloser Wahl der ersten Rufnummer angewählt wird (werden).

7. Fernsprechapparat nach Anspruch 1, dadurch gekennzeichnet, daß die Zeitsteuerung bedarfsweise aktivierbar ist.